# EUROPEAN PATENT SPECIFICATION

(11) **EP 1 749 639 B1**
(45) Date of publication and mention of the grant of the patent: **11.11.2009**
(21) Application number: 06253863.2
(22) Date of filing: 24.07.2006
(51) Int. Cl.: B29C 63/42, B32B 15/08, B32B 1/08

(54) **Method for making plastic metal composite parts**
Verfahren zur Herstellung von Verbundwerkstücken aus Metall und Kunststoff
Procédé pour fabriquer des pièces composites en métal et plastique

(30) Priority: 29.07.2005 US 703468
(43) Date of publication of application: 07.02.2007
(73) Proprietor: SALFLEX POLYMERS LTD., Weston, Ontario M9M 1A9 (CA)
(72) Inventor: Sadr, Changize, Ontario M2L 1C7 (CA)
(74) Representative: Carter, Stephen John

(56) References cited:
- US-A1- 2003 102 045

## Description

### FIELD OF THE INVENTION

This invention relates to the field of composite parts, principally laminate composites comprising a tubular structure having an internal, metallic, tubular component and an external thermoplastic component.

### BACKGROUND OF THE INVENTION

There are many applications for tubular metal conduits, particularly in the automotive industry. Often structures having a generally tubular shape are to be joined to other structures which may be made from thermoplastic materials. Those other structures may be blow molded structures, injection molded structures or made with other plastic forming processes such as thermoforming and the like. Often it is desired to support or join the tubular structure to adjacent plastic structure. It is difficult to join plastic and metal components. If the tubular structure can be made from thermoplastic materials, then the tubular structure can be readily welded to adjoining thermoplastic materials by various plastic welding techniques such as hot plate welding and the like.

Metallic tubular-like structures are particularly advantageous where certain complex shapes are concerned. It is well-known that metallic tubular structures may be formed using hydroforming techniques e.g. from US-2003/0102045 A1. Thus, it is commercially desirable to be able to use the hydroforming processes and that in turn makes desirable the use of metallic tubular components. To blend the two desired areas above together, it would be desirable to present a structure which can be hydroformed while still being readily adaptable to be welded to adjoining plastic components.

### SUMMARY OF THE INVENTION

In accordance with the present invention, a method is provided according to claim 1.

### BRIEF DESCRIPTION OF THE DRAWINGS

The invention will be better understood by reference to the accompanying drawings which illustrate, by way of example, a laminated component and the process for making the laminate component in accordance with the invention.

Figure 1 is a perspective view of components of a product to be assembled in accordance with the invention;

Figure 2 is a perspective view of the components of Figure 1 after assembly and after an initial manufacturing operation;

Figure 3 illustrates the assembly of Figure 2 and a mold;

Figure 4 illustrates the components of Figure 3 with the mold in a closed condition after a second process has been carried out;

Figure 5 illustrates the components of Figure 4 with the mold in an open condition;

Figure 6 shows the component manufactured as illustrated in Figure 5 ready to be joined to a plurality of secondary components;

Figure 7 shows the completion of the assembly of the components of Figure 6;

Figure 8 is a perspective view of the assembly of the components of Figure 1 in an alternate mold structure;

Figure 9 illustrates the components of Figure 8 with the mold in a closed position;

Figure 10 illustrates the finished product of the process of Figure 9 with the mold in an open position;

Figure 11 shows the product formed in Figure 10 together with a plurality of secondary components to be assembled together, and

Figure 12 shows the finished plastic metal composite part made from the components illustrated in Figure 11.

### DETAILED DESCRIPTION OF THE INVENTION

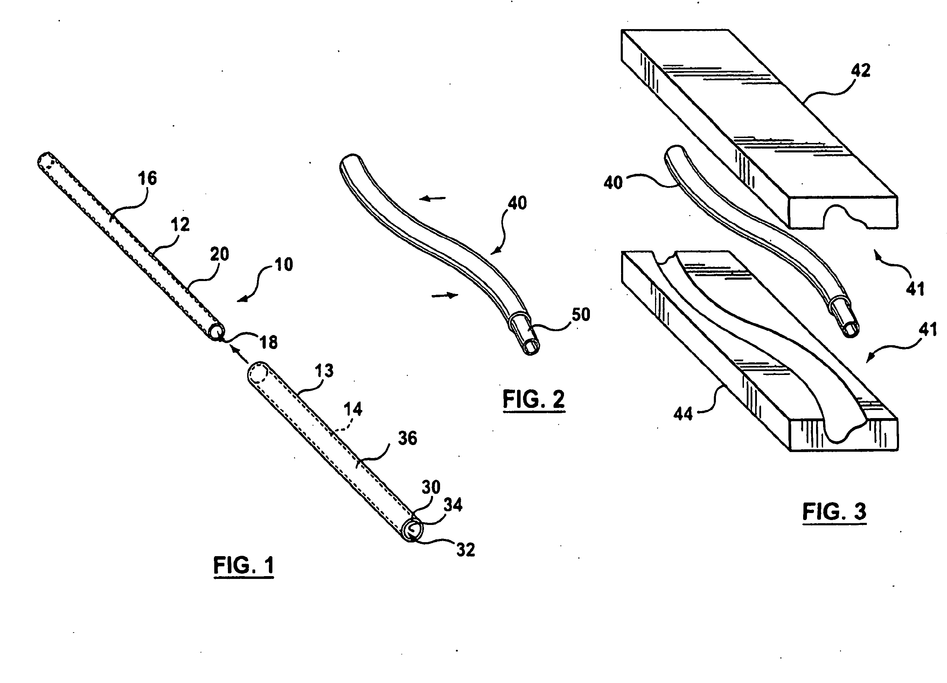

Figure 1 illustrates the components to create a laminated preform 10. Generally the laminated preform 10 includes a metallic preform 12 and a plastic part 13 in the form of a sleeve 14. Preferably the metallic preform 12 is essentially tubular in nature with a generally cylindrical wall 16 defining an internal volume 18. The cylindrical wall 16 also defines an exterior surface 20.

The plastic sleeve 14 comprises a generally cylindrical wall 30. The generally cylindrical wall 30 defines an internal bore 32 which is defined by the internal surface 34 of the wall 30. The wall 30 also defines a substantially cylindrical outer surface 36.

The size of the bore 32 is selected in correlation to the diameter of the surface 20 of the metallic preform so as to ensure a convenient fit. The term "convenient fit" is used in this disclosure and claims to indicate that there is no substantial movement after the processes described herein below between the metallic preform 12 and the sleeve 14 but where the fit is such that the sleeve 14 may be slid onto the metallic preform 12 without undue difficulty.

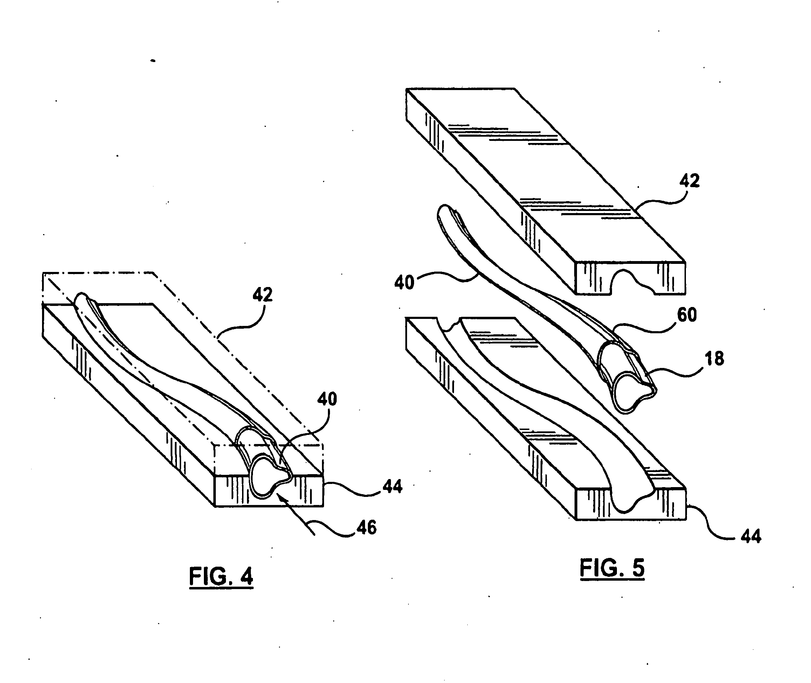

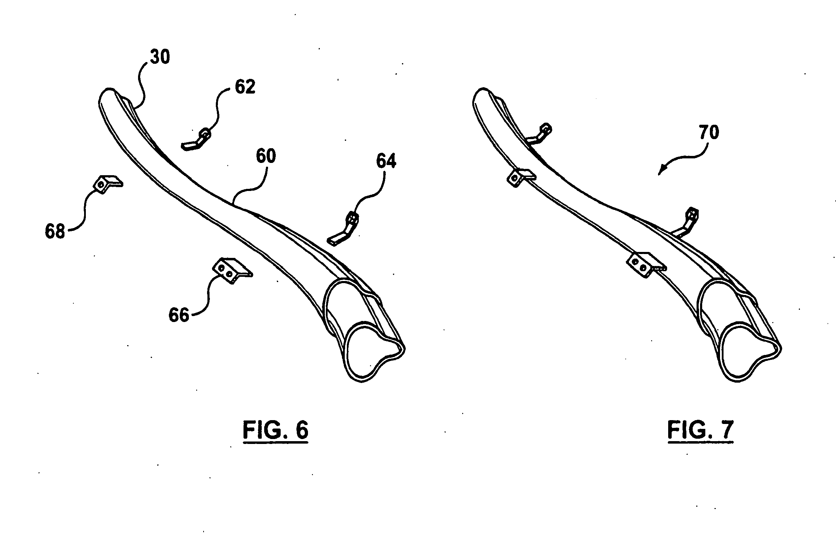

The first step in the process is to axially assemble the metallic preform 12, that is the metallic preform 12 is located within the bore 32 of the sleeve 14. This then comprises the laminated preform 10 having an inner metallic layer constituting the metallic preform 12 and an external plastic layer constituting the sleeve 14. Other or more layers may be utilized if desired. In the particular example illustrated in Figures 1 through 7, the laminated preform 10 is first subjected to normal tubular bending. After being bent in a normal tubular bending machine, there is a bent laminated preform 40 as illustrated in Figure 2. In order to shape the laminate preform 40, the laminate preform 40 is placed in a hydroforming mold 41 comprising mold sections 42 and 44. The bent laminated preform 40 is shown in the closed mold in Figure 4. The upper mold half as shown in Figure 4, 42, is shown in phantom line. The arrow 46, indicates the direction of application of a hydroforming liquid under pressure. In hydroforming, a high pressure, substantially incompressible, liquid is supplied to the interior of at least a portion of a preform. The hydrostatic pressure then forces the metal outwardly to assume the shape of the mold as desired. In the example illustrated in Figure 3, it will be observed that the metal preform 12 extends beyond the sleeve 14 at the region identified by the numeral 50. The mold 42, 44 closely receives the bent laminated preform with the only cavity allowing movement being adjacent the area 50. This is illustrated in Figure 2. Once the hydroforming pressure has been supplied as shown by arrow 46, the metal will be stretched and moved outwardly. When the mold is opened as shown in Figure 5, the laminated preform 40 has been formed to comprise a laminated structural component 60. The laminated structural component 60 has an internal metallic wall and an external plastic wall. As shown in Figure 4, either end of the laminated preform may be subjected to hydroforming pressures and molded as desired. The hydroform and laminated structural component 60 is illustrated in Figure 6, together with a plurality of secondary plastic components 62, 64, 66 and 68, each in the form of a mounting bracket. The plastic brackets 62, 64, 66 and 68 are all made from a plastic which is readily weldable to the exterior surface of the wall 30 of sleeve 40. The items illustrated in Figure 6 are then assembled to produce the finished plastic-metal composite part 70 as illustrated in Figure 7. In order to join the plastic brackets 62, 64, 66 and 68 to the laminated structural component 60, the plastic of the wall 30 and the plastic of the mounting brackets are welded together using any available plastic welding process. These processes may be hot plate welding, chemically welding, thermally welding or any other type of welding for joining two plastic surfaces together. The finished plastic-metal composite part 70 is then comprised of a hydroformed inner metallic tubular member having on its exterior surface a plastic wall to which secondary plastic components have been welded. The secondary components in this example have been indicated as brackets 62, 64, 66 and 68. There need not be four such brackets and the brackets can be of any shape or configuration as desired. These secondary components need not be brackets but may be any component that is desirably welded to the laminated structural component 60.

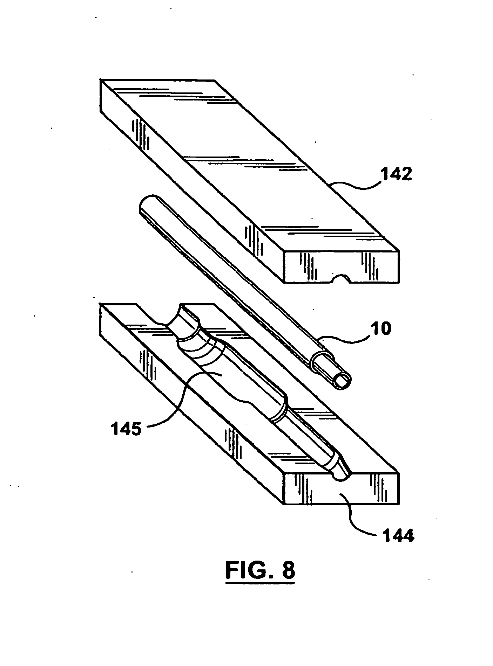

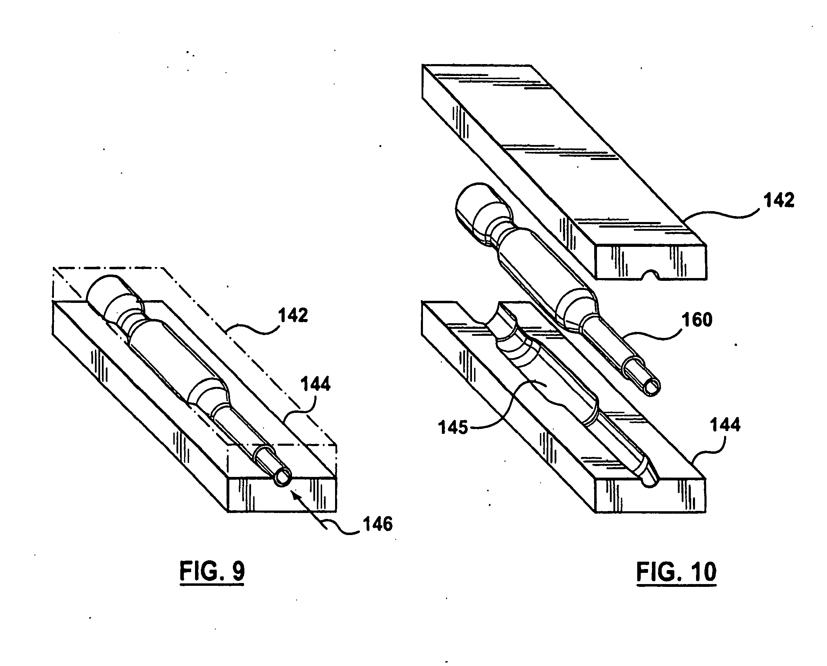

Figure 8 illustrates the commencement of an alternate hydroforming process. In Figure 8, the assembly of the laminated preform 10 of the components illustrated in Figure 1 has been completed. However, in this case, the laminated preform 10 is not to be subjected to any preliminary bending processes but rather is to be loaded directly into a hydroforming mold 141 having mold parts 142 and 144. As shown in Figure 8, the mold parts 142 and 144 contain an enlarged cavity 145. Figure 9 illustrates the mold parts 142, 144 in the closed configuration with the mold portion 142 illustrated in phantom. Hydroforming pressure has been applied as diagrammatically indicated by the arrow 146 to the interior of the laminated preform 10. Under the force generated by the hydroforming pressure, the laminated preform 10 is made to stretch outwardly to conform to the mold cavity contours as shown in Figures 9 and 10. When carrying out a thermoforming process of this example, the metal is being stretched to flow outwardly to conform to the cavity 145. Also, the plastic wall 30 of the sleeve 14 has also been required to flow outwardly so as to conform to the mold cavity. When this type of part is required, the sleeve 14 must be comprised of a plastic which is flowable under the conditions present in the thermoforming mold. The thermoforming mold may involve the application of heat, where desirable, to make the plastic more flowable so that the plastic may flow along with the metal to conform to the mold contours. The hydroformed laminated structural component 160 is illustrated emerging from the mold 140, 142 in Figure 10.

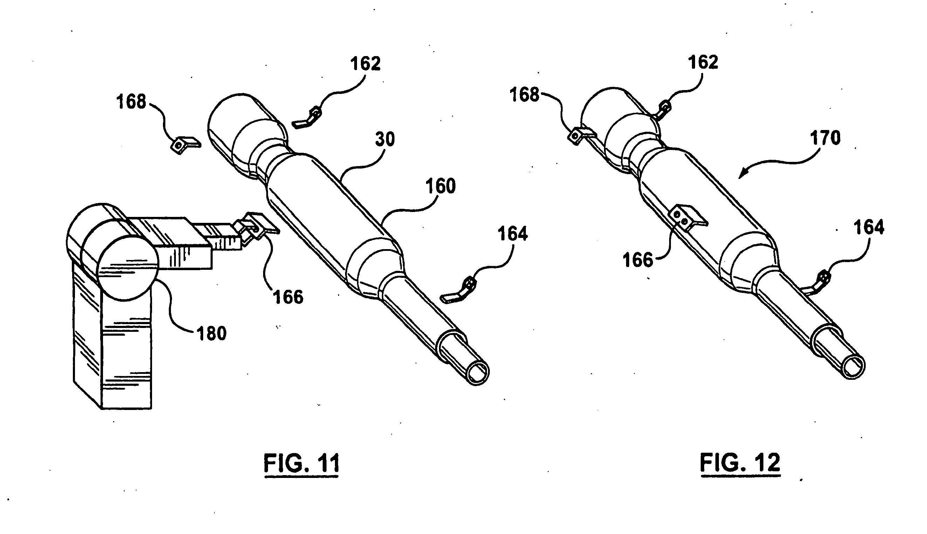

Figure 11 illustrates the hydroformed laminated structural component 160 together with a plurality of secondary plastic components in the form of brackets 162, 164, 166 and 168. As shown in Figure 11, the various brackets may be positioned in the desired position on the laminated structural component 160 by means of a robotic arm 180. The robotic arm 180 can be used to manipulate brackets such as bracket 166, illustrated by way of example. The robotic arm 180 may also be equipped with heating means so as to move the bracket 166 adjacent to a heat source such as a hot plate to raise the weldable surface to the desired temperature and then position the bracket against the exterior surface 30 of the laminated structural component to weld the plastic of the bracket 166 to the wall 30. The finished plastic-metal composite part 170 is illustrated in Figure 12. This consists of the hydroformed laminated structural component 160 and a plurality of secondary plastic components 162, 164, 166 and 168, all of which have been plastic welded to the laminated structural component 160.

The plastic sleeve 14, may be a mono-layer or multi-layer plastic component. A multi-layer structure may have two or more layers. One outer structural plastic layer together with an inner adhesive layer that facilitates bonding of plastic to metal upon heating is but one advantageous example. Examples of suitable plastics are maleic anhydride modified high density polyethylene inner layer and a high density polyethylene outer layer. Thermoplastics that may be used include polyethylene; acid-modified polyethylene, polypropylene, acid-modified polypropylene, thermoplastic olefin or polyamide and others. The sleeve may also be made from a thermoplastic elastomer to facilitate expansion of the sleeve during hydroforming without requiring additional heating. If desired, the plastic sleeve may be chemically modified to impart certain desired properties, for example, carbon filler may be added to make a layer conductive.

The plastic sleeve 14 may be made from a material that permits the sleeve 14 to be heat shrinkable. For example, the plastic sleeve 14 may be made from polypropylene or polyethylene such that it contracts upon heating to mechanically bond to the metal sleeve.

The metal sleeve could be manufactured from any metal. Typically the choice of metal will determine what, if any, fluid is to be used inside the end product if the product is to be used as a conduit for fluid. If so, and there is some requirement for resistance to degradation by the fluid, then suitable materials may be used. One example is use of a 400 series stainless steel which is a suitable fluid resistant to many liquids.

As it is intended that one or more secondary plastic components be welded to the wall of the plastic sleeve, the plastic sleeve has a wall 30 which is of sufficient thickness to allow welding such as by hot plate welding.

In this disclosure the plastic part 13 has been illustrated as a sleeve 14. Other types of plastic wall 30 may be utilized if desired. For example, a plastic wall 30 could be created by depositing a plastic directly on the metallic preform 12 such as by deposition, dipping or molding in place.

While this invention has been discussed in the context of tubular starting components and a tubular end component, this invention is not restricted to the manufacture of conduits. The method and product as described herein is useful in any circumstances where advantage can be taken of the strength of the metallic preform as well as the desirability of the external plastic surface of the plastic part 13. Thus, any part having a hydro-formable, generally tubular, configuration may be advantageously manufactured according to the method disclosed herein.

Examples of other products which can advantageously be made using this method include running boards for installation on vehicles, vehicle roof rack rails and the like.

## Claims

1. A method for making a plastic metal composite part comprising:
providing a tubular metallic preform,
coating said metallic preform (12) with an outer plastic layer (13) to form a laminated preform,
forming said laminated preform (10) to create a laminated structural component,
providing at least one secondary plastic component (62,64,66,68), and
welding said at least one secondary plastic component to said outer plastic layer to create said plastic metal composite part.

2. The method of claim 1 wherein said method comprises providing a tubular plastic sleeve and said method comprises inserting said tubular metallic preform into said plastic sleeve.

3. The method of claim 2 wherein said plastic sleeve is fixed to said tubular metallic preform by heat shrinking said tubular plastic sleeve.

4. The method of any one of claims 1 through 3 wherein said forming of said laminated preform is a hydroforming process.

5. The method of claim 4 wherein at least a portion of said metallic preform is subjected to said hydroforming process.

6. The method of claim 5 wherein at least a portion of said outer plastic layer is also subjected to said hydroforming process.

7. The method of any one of claims 1 through 6 wherein a plurality of secondary components are provided and each of said secondary components are welded to said outer plastic layer.

8. The method of any one of claims 1 through 7 wherein said secondary plastic component is welded by hot plate welding, or thermal welding, or chemical welding, or other welding processes.

9. The method of claim 2 wherein said plastic sleeve comprises plastic which is chemically modified to input a desired property such as electrical conductivity.

10. The method of claim 1 wherein said outer plastic layer is bonded to said tubular metallic preform.

11. The method of claim 1 wherein said outer plastic layer is a multi-layer plastic composite.

12. A plastic metal composite part comprising a laminated generally tubular structural component (10) comprising a generally tubular metallic component (12) having an exterior surface, and a plastic thermoformable sleeve (13) said sleeve having a convenient fit to said structural component wherein at least a portion of said structural component is hydroformed, said composite part comprising at least one secondary plastic component (62, 64, 66, 68) wherein said at least one plastic secondary component is bonded to said sleeve.

13. The composite part of claim 12 said part comprising a plurality of said secondary components and each of said secondary components are bonded to said sleeve.

14. The composite part of claim 13 wherein said secondary components are fused to said sleeve.

## Patentansprüche

1. Verfahren zur Herstellung eines Verbundwerkstücks aus Metall und Kunststoff, umfassend:
die Bereitstellung eines röhrenförmigen metallischen Vorformlings,
das Beschichten des metallischen Vorformlings (12) mit einer äußeren Kunststoffschicht (13) zur Ausbildung eines laminierten Vorformlings,
das Formen des laminierten Vorformlings (10) zur Herstellung einer laminierten Strukturkomponente,
die Bereitstellung zumindest einer sekundären Kunststoffkomponente (62, 64, 66, 68) und
das Anschweißen zumindest einer sekundären Kunststoffkomponente an die äußere Kunststoffschicht zur Herstellung des Verbundwerkstücks aus Metall und Kunststoff.

2. Verfahren nach Anspruch 1, worin das Verfahren die Bereitstellung einer röhrenförmigen Kunststoffmanschette und das Einführen des röhrenförmigen metallischen Vorformlings in die Kunststoffmanschette umfasst.

3. Verfahren nach Anspruch 2, worin die Kunststoffmanschette durch Wärmeschrumpfung der röhrenförmigen Kunststoffmanschette an dem röhrenförmigen metallischen Vorformling befestigt wird.

4. Verfahren nach einem der Ansprüche 1 bis 3, worin das Formen des laminierten Vorformlings in einem Hydroforming-Verfahren erfolgt.

5. Verfahren nach Anspruch 4, worin zumindest ein Abschnitt des metallischen Vorformlings dem Hydroforming-Verfahren unterzogen wird.

6. Verfahren nach Anspruch 5, worin zumindest ein Abschnitt der äußeren Kunststoffschicht ebenfalls dem Hydroforming-Verfahren unterzogen wird.

7. Verfahren nach einem der Ansprüche 1 bis 6, worin eine Vielzahl sekundärer Komponenten bereitgestellt wird und jede der sekundären Komponenten an die äußere Kunststoffschicht geschweißt wird.

8. Verfahren nach einem der Ansprüche 1 bis 7, worin die sekundäre Kunststoffkomponente durch Heizelementschweißen, thermisches Schweißen, chemisches Schweißen oder andere Schweißverfahren angeschweißt wird.

9. Verfahren nach Anspruch 2, worin die Kunststoffmanschette Kunststoff umfasst, der chemisch modifiziert ist, um eine gewünschte Eigenschaft, wie z.B. elektrische Leitfähigkeit, zu verleihen.

10. Verfahren nach Anspruch 1, worin die äußere Kunststoffschicht mit dem röhrenförmigen Vorformling haftschlüssig verbunden wird.

11. Verfahren nach Anspruch 1, worin die äußere Kunststoffschicht ein mehrschichtiger Kunststoffverbundstoff ist.

12. Verbundwerkstück aus Metall und Kunststoff, umfassend eine laminierte, im Allgemeinen röhrenförmige Strukturkomponente (10), die eine im Allgemeinen röhrenförmige, metallische Komponente (12) mit einer Außenoberfläche und eine thermoformbare Kunststoffmanschette (13) umfasst, wobei die Manschette angemessen an die Strukturkomponente angepasst ist, worin zumindest ein Abschnitt der Strukturkomponente durch Hydroforming ausgebildet ist, wobei das Verbundstoffteil zumindest eine sekundäre Kunststoffkomponente (62, 64, 66, 68) umfasst, worin die zumindest eine sekundäre Kunststoffkomponente mit der Manschette haftschlüssig verbunden ist.

13. Verbundstoffteil nach Anspruch 12, wobei das Teil eine Vielzahl sekundärer Komponenten umfasst und jede der sekundären Komponenten mit der Manschette haftschlüssig verbunden ist.

14. Verbundstoffteil nach Anspruch 13, worin die sekundären Komponenten mit der Manschette verschmolzen sind.

## Revendications

1. Procédé pour fabriquer des pièces composites en métal et plastique comprenant:
réaliser une préforme métallique tubulaire,
revêtir ladite préforme métallique (12) d'une couche de plastique extérieure (13) pour former une préforme laminée,
former ladite préforme laminée (10) pour créer un composant structurel laminé,
réaliser au moins un deuxième composant en plastique (63, 64, 66, 68), et
souder ledit au moins un deuxième composant en plastique à ladite couche plastique extérieure pour créer ladite pièce composite en métal et plastique.

2. Procédé selon la revendication 1, dans lequel ledit procédé comprend la réalisation d'un manchon plastique tubulaire, et ledit procédé comprend l'insertion de ladite préforme métallique tubulaire dans ledit manchon plastique.

3. Procédé selon la revendication 2, dans lequel ledit manchon plastique est fixé à ladite préforme tubulaire métallique par thermorétraction dudit manchon plastique tubulaire.

4. Procédé selon l'une quelconque des revendications 1 à 3, dans lequel ladite formation de ladite préforme laminée est un processus d'hydroformage.

5. Procédé selon la revendication 4, dans lequel au moins une portion de ladite préforme métallique est soumise audit processus d'hydroformage.

6. Procédé selon la revendication 5, dans lequel au moins une portion de ladite couche plastique extérieure est également soumise audit processus d'hydroformage.

7. Procédé selon l'une quelconque des revendications 1 à 6, dans lequel une pluralité de composants secondaires sont réalisés, et chacun desdits composants secondaires est soudé à ladite couche plastique extérieure.

8. Procédé selon l'une quelconque des revendications 1 à 7, dans lequel ledit composant plastique secondaire est soudé par soudage sur plaque chauffante ou soudage thermique ou soudage chimique ou autres processus de soudage.

9. Procédé selon la revendication 2, dans lequel ledit manchon plastique comprend un plastique qui est chimiquement modifié pour conférer une spécificité souhaitée, comme la conductivité électrique.

10. Procédé selon la revendication 1, dans lequel ladite couche plastique extérieure est soudée à ladite préforme métallique tubulaire.

11. Procédé selon la revendication 1, dans lequel ladite couche plastique extérieure est un composé plastique multi-couche.

12. Pièce composite en métal et plastique comprenant un composant structurel laminé généralement tubulaire (10) comprenant un composant métallique généralement tubulaire (12) ayant une surface extérieure, et un manchon plastique thermoformable (13), ledit manchon s'ajustant dans ledit composant structurel, où au moins une portion dudit composant structurel est hydroformée, ladite pièce composite comprenant au moins un composant plastique secondaire (62, 64, 66, 68), où ledit au moins un composant secondaire plastique est lié audit manchon.

13. Pièce composite selon la revendication 12, ladite pièce comprenant une pluralité desdits composants secondaires, et chacun desdits composants secondaires est lié audit manchon.

14. Pièce composite selon la revendication 13, où lesdits composants secondaires sont scellés audit manchon.
